# EUROPEAN PATENT SPECIFICATION

(11) **EP 2 233 524 B1**
(45) Date of publication and mention of the grant of the patent: **30.05.2012**
(21) Application number: 08862042.2
(22) Date of filing: 15.12.2008
(51) Int. Cl.: C08L 23/00, C08L 23/10, C08L 67/04, C08L 67/00, B29C 45/00, B29K 23/00, B29K 67/00

(54) **MOLDED OBJECT AND PROCESS FOR PRODUCING THE SAME**
GEFORMTES OBJEKT UND VERFAHREN ZU DESSEN HERSTELLUNG
OBJET MOULÉ ET PROCÉDÉ DE PRODUCTION

(30) Priority: 17.12.2007 JP 2007324583
(43) Date of publication of application: 29.09.2010
(73) Proprietor: Toyota Jidosha Kabushiki Kaisha, Toyota-shi, Aichi 471-8571 (JP); Sumitomo Chemical Company, Limited, Tokyo 104-8260 (JP)
(72) Inventor: MIYAKE, Yuichi, Toyota-shi Aichi 471-8571 (JP); NISHIMURA, Takuya, Toyota-shi Aichi 471-8571 (JP); MORITOMI, Satoru, Ichihara-shi Chiba 299-0195 (JP); SHIMANO, Mitsuyoshi, Ichihara-shi Chiba 299-0195 (JP)
(74) Representative: Albutt, Anthony John
(86) International application number: PCT/JP2008/072763
(87) International publication number: WO 2009/078375

(56) References cited:
- JP-A- 6 263 892
- JP-A- 2003 313 434
- JP-A- 2006 052 248
- JP-A- 2006 077 063
- JP-A- 2007 277 444
- JP-A- 2008 038 142

## Description

### Technical Field

The present invention relates to a molded article using a resin composition comprising an aliphatic polyester-based polymer, such as polylactic acid, and a polyolefin-based polymer, and a method for producing the same.

### Background Art

A polymer alloy technology for producing a polymer composition having properties of interest by blending a plurality of types of polymers is known. For example, an attempt to obtain biodegradable molding materials by mixing so-called biodegradable plastics with polyolefin-based polymers, which are known as general-purpose polymers, has been proposed. Based on this perspective, JP Patent Publication (kokai) No. 2006-77063 A discloses a technique of mixing acid- or epoxy group-containing polyolefin with a polymer alloy of a polyolefin-based polymer and a biodegradable plastic to improve the dispersion conditions of a polyolefin-based polymer and a biodegradable plastic.

Also, JP Patent Publication (kokai) No. 2006-52248 A discloses a polymer alloy comprising polylactic acid resin, epoxy group-containing polyolefin resin, and epoxy resin. JP Patent Publication (kokai) No. 2006-52248 A discloses that such a composition results in a polylactic acid-based resin composition with improved impact resistance, hydrolysis resistance, and thermal stability.

According to the technology disclosed in JP Patent Publication (kokai) No. 2006-77063 A, the impact resistance of a molded article using a polymer alloy containing a polyolefin-based polymer can be improved. However, other properties, such as dimensional stability in particular, could not be significantly improved.

According to the technology disclosed in JP Patent Publication (kokai) No. 2006-52248 A, properties of biodegradable polylactic acid resin can be improved, but this technology would not improve properties of a polyolefin-based polymer, which is a general-purpose polymer.

### Disclosure of the Invention

### Problem to Be Resolved by the Invention

Under the above circumstances, the present invention is intended to provide a molded article that is excellent in planar impact resistance and shape stability with the use of a composition comprising a polyolefin-based polymer and an aliphatic polyester-based polymer and to provide a moled article that is less likely to experience layer separation at the time of molding and a method for producing the same.

### Means for Resolving the Problem

The present inventors have conducted concentrated studies in order to attain the above objects. As a result, they discovered that the use of an aliphatic polyester-based polymer having a certain aspect ratio for a resin composition prepared by mixing a composition of a polyolefin-based polymer and an aliphatic polyester-based polymer with a given elastomer would lead to the production of a molded article that is excellent in planar impact resistance and shape stability and to the prevention of layer separation that occurs at the time of molding. This has led to the completion of the present invention.

Specifically, the present invention includes the following.

(1) A molded article comprising a resin composition comprising a polyolefin-based polymer (A) not comprising an epoxy group, an aliphatic polyester-based polymer (B), an ethylene-α olefin-based elastomer (C), and an epoxy group-containing polyolefin-based polymer (D), wherein the aliphatic polyester-based polymer (B) has an aspect ratio A1 of 1.0 to 3.6 at a flow length of 0.1 L, an aspect ratio A2 of 1.0 to 3.8 at a flow length of 0.9 L, and an average particle diameter of less than 1 µm at a flow length of 0.9 L when the maximum flow length is designated as L.

When the total amount of the polyolefin-based polymer (A) not comprising an epoxy group, the aliphatic polyester-based polymer (B), the ethylene-α olefin-based elastomer (C), and the polyolefin-based polymer (D) is designated as 100% by weight in the molded article according to the present invention, it is preferable that the content of (A) be 30% to 90% by weight, the content of (B) be 1% to 50% by weight, the content of (C) be 1% to 40% by weight, and the content of (D) be 0.02% to 20% by weight. Also, it is preferable that the ethylene-α olefin-based elastomer (C) have a melt flow rate (MFR), measured at 190°C under a load of 21N, of 0.5 to 3.0 g/10 minutes and a density of 0.855 to 0.875 g/cm³. The molded article according to the present invention particularly preferably has a maximum flow length L of 200 mm or more. The polyolefin-based polymer (A) not comprising an epoxy group is preferably a crystalline polypropylene-based polymer.

Also, the present invention can provide a method for producing a molded article wherein the aforementioned resin composition is processed into a given form by molding.

This description includes part or all of the contents disclosed in the description and/or drawings of Japanese Patent Application No. 2007-324583, on which the priority claim of the present application is based.

### Best Modes for Carrying out the Invention

Hereafter, the present invention is described in greater detail.

The molded article according to the present invention can be obtained by subjecting a resin composition of a given formulation to injection molding. The resin composition comprises: a polyolefin-based polymer (A); an aliphatic polyester-based polymer (B) having an aspect ratio A1 of 1.0 to 3.6 at a flow length of 0.1 L, an aspect ratio A2 of 1.0 to 3.8 at a flow length of 0.9 L, and an average particle diameter of less than 1 µm at a flow length of 0.9 L when the maximum flow length is designated as L; an ethylene-α olefin-based elastomer (C); and an epoxy group-containing polyolefin-based polymer (D). Hereafter, such components are described in detail.

### Polyolefin-based polymer (A)

The term "polyolefin-based polymer (A)" refers to a polymer comprising polyolefin as a main component. A polymer having, at least in part, a crystalline region is preferably used as the polyolefin-based polymer (A). In other words, a crystalline polyolefin-based polymer is preferably used as the polyolefin-based polymer (A). A non-crystalline polymer may also be used as the polyolefin-based polymer (A). When a crystalline polymer is used as the polyolefin-based polymer (A), the degree of crystallinity determined by X-ray diffraction analysis is 25% or higher, preferably 35% or higher, and more preferably 40% or higher. Examples of polyolefins that can be used herein include butene-based polymers, methylpentene-based polymers, polyethylene-based polymers, and polypropylene-based polymers. The polyolefin-based polymer (A) may be a mixture of two or more of such polyolefins.

The polyethylene-based polymers, which are are not particularly limited, include polyethylene resins, such as low-density polyethylene, high-density polyethylene, linear low-density polyethylene, and ultra high molecular weight polyethylene, and copolymers of ethylene and a polar monomer, such as ethylene-vinyl acetate copolymers, ethylene-methyl acrylate copolymers, ethylene-ethyl acrylate copolymers, ethylene-methyl methacrylate copolymers, ethylene-dimethylaminomethyl methacrylate copolymers, ethylene-vinyl alcohol copolymers, and ethylene oxide adducts of ethylene-vinyl alcohol copolymers.

The polypropylene-based polymers, which are not particularly limited, include polypropylenes, such as homoisotactic polypropylene, isotactic polypropylene random copolymers containing ethylene or 1-butene, isotactic polypropylene block copolymers containing ethylene propylene, Ziegler-Natta catalyst catalyzed isotactic polypropylene, metallocene catalyzed isotactic polypropylene, metallocene catalyzed syndiotactic polypropylene, and atactic polypropylene; and functionalized polypropylenes, such as a polymer alloy of polypropylene and rubber, a polypropylene/filler composite, and chlorinated polypropylene.

The melt flow rate (MFR) of the polyolefin-based polymer (A) measured at 230°C under a load of 21N is not particularly limited, and it is preferably 1 to 100 g/10 minutes, more preferably 10 to 80 g/10 minutes, and most preferably 30 to 60 g/10 minutes. Further, the flexural modulus of the polyolefin-based polymer (A) at 23°C is not particularly limited, and it is preferably 500 to 2,000 Mpa.

### Aliphatic polyester-based polymer (B)

Examples of the aliphatic polyester-based polymer (B) include aliphatic polyesters prepared by ring-opening polymerization, such as polylactic acid, polyglycolic acid, poly(3-hydroxybutyric acid), poly(4-hydroxybutyric acid), poly(4-hydroxyvaleric acid), and polycaprolactone, and aliphatic polyesters prepared by polycondensation, such as polyester carbonate, polyethylene succinate, polybutyrene succinate, polyhexamethylene succinate, polyethylene adipate, polybutyrene adipate, polyhexamethylene adipate, polyethylene oxalate, polybutyrene oxalate, polyhexamethylene oxalate, polyethylene sebacate, and polybutyrene sebacate. Among them, poly(α-hydroxy acid), such as polylactic acid and polyglycolic acid, is preferable as the aliphatic polyester-based polymer (B), and polylactic acid is particularly preferable. General polylactic acid is a highly biodegradable crystalline polymer, which is represented by general formula: H-[O-CH(CH₃)-C(O)]ₙ-OH and which has a melting point of about 160°C to about 170°C and a glass transition point of about 58°C.

As the aliphatic polyester-based polymer (B), one of the aforementioned types of aliphatic polyesters may be used alone, or a blend or copolymer of two or more types of such polyesters may be used. Examples of such a copolymer of an aliphatic polyester include a copolymer of lactic acid and a hydroxy acid other than lactic acid and polybutyrene succinate adipate. As a blend of aliphatic polyester, for example, polylactic acid-based polylactic acid resin is preferable. Examples of other resins to be blended with polylactic acid include the aforementioned aliphatic polyesters other than polylactic acid; aromatic polyesters, such as polyethylene terephthalate and polybutyrene terephthalate; polyamides, such as Nylon 6, Nylon 6,6, Nylon 6,9, Nylon 6,10, Nylon 6,12, Nylon 11, and Nylon 12; and natural rubber. In such polylactic acid-based resin, the proportion of resins other than polylactic acid is preferably 40% by weight or lower, and more preferably 30% by weight or lower.

When polylactic acid is used as the aliphatic polyester-based polymer (B), a method for synthesizing polylactic acid, which is not particularly limited, may be direct polymerization of D-lactic acid or L-lactic acid or ring-opening polymerization of a cyclic dimer of lactic acid, such as D-lactide, L-lactide, or meso-lactide. Polylactic acid may be composed of only L-lactic acid-derived monomer units or D-lactic acid-derived monomer units, or it may be a copolymer having both types of monomer units. Further, a blend comprising arbitrary proportions of a plurality of polylactic acids differing with respect to the proportions of the L-lactic acid-derived monomer units and the D-lactic acid-derived monomer units may be used as the aliphatic polyester-based polymer (B).

Further, a copolymer prepared by further polymerizing other polymerizable monomer components, such as glycolide or caprolactone, in addition to the above lactic acid or lactide components may be used as polylactic acid. A product obtained by blending a polymer resulting from homopolymerization of such other polymerizable monomers with polylactic acid may be used as the aliphatic polyester-based polymer (B).

The MFR of the aliphatic polyester-based polymer (B) measured at 190°C under a load of 21N is not particularly limited, and it is preferably 0.5 to 50 g/10 minutes, more preferably 1 to 30 g/10 minutes, and most preferably 10 to 20 g/10 minutes.

### Ethylene-α olefin-based elastomer (C)

The term "ethylene-α olefin-based elastomer (C)" used herein refers to a rubber-like elastic material having an ethylene-α olefin skeleton. The ethylene-α olefin-based elastomer (C) comprises a rubber having crosslinked points within molecules and a thermoplastic elastomer in which molecules are restrained by a group of molecules in a hard layer. In particular, the elastomer (C) is preferably restricted to have a property such that the MFR measured at 190°C under a load of 21 N is 0.5 to 3.0 g/10 min. The MFR means a value measured in accordance with JIS K 7210, "the method for testing the flow of thermoplastic plastic."

The elastomer (C), which is not particularly limited, includes, for example, aliphatic polyester elastomers, such as polybutyrene succinate carbonate; polyolefin-based elastomers, such as ethylene-propylene copolymers, ethylene-propylene-unconjugated diene copolymers, ethylene-butene-1 copolymers, ethylene-hexene-1 copolymers, and ethylene-octene-1 copolymers; acrylic elastomers, such as various acrylic rubbers, ethylene-acrylic acid copolymers and alkaline metal salts thereof (so-called ionomers), and ethylene-alkyl acrylate copolymers (e.g., ethylene-butyl acrylate copolymers); various elastomers, such as acid-modified ethylene-propylene copolymers, diene rubbers (e.g., polybutadiene, polyisoprene, and polychloroprene), copolymers of diene and a vinyl monomer (e.g., styrene-butadiene random copolymers, styrene-butadiene block copolymers, styrene-butadiene-styrene block copolymers, styrene-isoprene random copolymers, styrene-isoprene block copolymers, styrene-isoprene-styrene block copolymers, materials obtained by graft-copolymerizing styrene to polybutadiene, and butadiene-acrylonitrile copolymers), polyisobutylene, copolymers of isobutylene and butadiene or isoprene, natural rubber, thiokol rubber, polysulfide rubber, acrylic rubber, silicone rubber, polyurethane rubber, polyether rubber, and epichlorohydrin rubber.

The MFR of the aforementioned elastomer (C) measured at 190°C under a load of 21N can be adjusted to between 0.5 and 3.0 g/10 minutes by adequately regulating the degree of polymerization when polymerizing the elastomer.

Use of an elastomer having a density of 0.855 to 0.875 g/cm³ as the elastomer (C) is preferable. The density means a value measured in accordance with JIS K 7112, "the method for measuring plastic density and specific gravity." The density can be adjusted to between 0.855 and 0.875 g/cm³ by adequately regulating proportions of monomers to be used for producing the elastomer (C). In the case of an ethylene-butene-1 copolymer, for example, the weight ratio of ethylene to butene-1 (ethylene/butene-1) may be regulated to a range of from 78/22 to 85/15.

### Epoxy group-containing polyolefin-based polymer (D)

The term "epoxy group-containing polyolefin-based polymer (D)" refers to a polymer prepared by grafting an epoxy group-containing ethylene monomer to polyolefin or a polyolefin copolymer of an epoxy group-containing ethylene monomer, ethylene, or α-olefin. Specifically, such polyolefin-based polymer (D) is obtained by a graft or copolymerization reaction.

A graft reaction is carried out by graft polymerizing an epoxy group-containing ethylene monomer to a polyolefin skeleton. Examples of methods of graft reactions include a method in which polyolefin, an epoxy group-containing ethylene monomer, and a radical initiator are mixed with heating in a solvent, such as an aromatic hydrocarbon compound (e.g., xylene or toluene) or an aliphatic hydrocarbon compound (e.g., hexane or heptane), a method of performing graft polymerization in a suspention state, and a method in which polyolefin, an epoxy group-containing ethylene monomer, and a radical initiator are mixed in advance under conditions in which the radical initiator would not be substantially decomposed, and the resultant is subjected to melt-mixing using a kneading machine that is commonly used in the synthetic resin field, such as an extruder, a Banbury mixer, or a kneader.

In the case of a method involving melt-mixing, conditions for grafting are adequately selected by taking into consideration the deterioration of the polyolefin, the degradation of the epoxy group-containing ethylene monomer, the decomposition temperature of the radical initiator, and the like. In general, graft polymerization is carried out at 80°C to 350°C, and it is preferably carried out at 100°C to 300°C.

Specific examples of the epoxy group-containing ethylene monomer to be used for the graft reaction include glycidyl acrylate, glycidyl methacrylate, allyl glycidyl ether, and methacryl glycidyl ether.

A radical initiator to be used for the graft reaction generally has a one-minute half-life temperature of 80°C or higher. Typical examples of radical initiators to be used for the graft reactioin by melt-mixing include organic peroxides, such as dicumyl peroxide, benzoyl peroxide, di-tert-butyl peroxide, and 2,5-dimethyl-2,5-di(tert-butyl-peroxy)hexane. Examples of radical initiators to be used for the suspension graft reaction include organic peroxides, such as benzoyl peroxide, lauroyl peroxide, t-butyl peroxypivalate, t-butyl hydroperoxide, and dicumyl peroxide, and azo compounds, such as azobisisobutyronitrile and azobisdimethylvaleronitrile.

In the graft reaction, the proportions of an epoxy group-containing ethylene monomer and a radical initiator to be used relative to 100 parts by weight of polyolefin are generally as follows. In general, 0.1 to 20 parts by weight of the epoxy group-containing ethylene monomer is used. At 0.1 parts by weight or lower, the effects of polyester modification may be insufficient. When the proportion exceeds 20 parts by weight, some epoxy group-containing ethylene monomers may form their homopolymer without participating a graft reaction during the graft polymerization. In general, 0.001 to 5 parts by weight of the radical initiator is used. When the proportion of the radical initiator used is less than 0.001 parts by weight, the graft reaction may not proceed sufficiently. When the proportion exceeds 5 parts by weight, however, the occurrence of degradation and crosslinking may become apparent.

A copolymerization reaction is preferably carried out using equipment for producing high pressure low-density polyethylene. The epoxy group-containing ethylene monomer to be used for the copolymerization reaction is the same compound as that is used in the graft reaction. In general, the percentage thereof to be copolymerized is preferably 0.2% to 20% by mole, and particularly preferably 0.5% to 15% by mole. Further, other comonomers can be copolymerized with a polyolefin copolymer of an epoxy group-containing ethylene monomer with ethylene or α-olefin. Examples of such comonomers include unsaturated carboxylic esters and vinyl esters.

Examples of the unsaturated carboxylic esters include alkyl (meth)acrylates and alkoxyalkyl (meth)acrylates. Alkyl (meth)acrylates generally have 3 to 30 carbon atoms and particularly preferably have 4 to 20 carbon atoms. Alkoxyalkyl (meth)acrylates generally have 4 to 35 carbon atoms and particularly preferably have 4 to 20 carbon atoms.

Vinyl esters generally have 20 carbon atoms at most, and preferably have 4 to 16 carbon atoms. Examples thereof include vinyl acetate, vinyl propionate, and vinyl butyrate, and vinyl acetate is particularly preferable.

The MFR of the epoxy group-containing polyolefin-based polymer (D) measured at 190°C under a load of 21N is preferably 0.1 to 30 g/10 minutes, more preferably 1 to 15 g/10 minutes, and most preferably 1 to 10 g/10 minutes.

The molded article according to the present invention can be obtained in the form of interest by subjecting the resin composition comprising the polyolefin-based polymer (A), the aliphatic polyester-based polymer (B), the ethylene-α olefin-based elastomer (C), and the epoxy group-containing polyolefin-based polymer (D) described above to injection molding. Methods of processing the resin composition into the form of interest are not particularly limited, and any of injection molding, extrusion molding, blow molding, inflation molding, profile extrusion molding, injection blow molding, vacuum-pressure molding, or spinning can be preferably employed.

In the molded article obtained by molding a resin composition, the aliphatic polyester-based polymer (B) has an aspect ratio A1 of 1.0 to 3.6 at a flow length of 0.1 L, an aspect ratio A2 of 1.0 to 3.8 at a flow length of 0.9 L, and an average particle diameter of less than 1 µm when the maximum flow length at the time of molding of a resin composition is designated as L. The term "maximum flow length L" can be defined as the maximum distance of a molten resin having been injected into a mold from a gate at the time of injection molding flowed within the mold. The term "flow length of 0.1 L" refers to a flow length that is 0.1 times the maximum flow length L as defined above. The term "flow length of 0.9 L" refers to a flow length that is 0.9 times the maximum flow length L as defined above.

The aspect ratios A1 and A2 are values determined by measuring the length of the maximum diameter of the aliphatic polyester-based polymer (B) dispersed in the form of particles in the molded article and the length of the diameter in an orthogonal direction to the maximum diameter and dividing the length of the maximum diameter by the length of the diameter in the orthogonal direction to the maximum diameter.

An example of a method for particle diameter observation is a method in which a portion to be observed is cut from a molded article, the cut portion is sliced using a microtome, the slices are vapor-stained with ruthenium tetroxide (substances other than polylactic acid are thereby stained), and observation is then carried out using a transmission electron microscope. An image is photographed at the time of the observation and analyzed. Thus, the particle diameter and the aspect ratio can be determined.

The aspect ratio of the aliphatic polyester-based polymer (B) in a molded article can be regulated in the following manner. For example, the aspect ratio can be reduced by maintaining molding temperature or mold temperature high, and reducing the shear force applied to the molten resin.

In the molded article according to the present invention, the average particle diameter of the aliphatic polyester-based polymer (B) at a flow length of 0.9 L is preferably 1.0 µm or less. The average particle diameter of the aliphatic polyester-based polymer (B) in the molded article can be adjusted to 1.0 µm or less, for example, by blending component (A) in a content of 30% to 90% by weight, component (B) in a content of 1% to 50% by weight, component (C) in a content of 1% to 40% by weight, and component (D) in a content of 0.02% to 20% by weight, and thoroughly melt-kneading them using a biaxial kneader, or the like.

In the molded article according to the present invention, the aliphatic polyester-based polymer (B) is presented in such a manner that, when the maximum flow length at the time of molding of the resin composition is designated as L, the aspect ratio A1 at a flow length of 0.1 L is 1.0 to 3.6, the aspect ratio A2 at a flow length of 0.9 L is 1.0 to 3.8, and the average particle diameter at a flow length of 0.9 L is less than 1 µm. By defining the configuration of the particles of the aliphatic polyester-based polymer (B) in the molded article, the degree of orientation of dispersed particles received within the shear field at the time of molding can be maintained within a fixed range. This can remarkably improve the planar impact resistance and dimensional stability of the molded article. In addition, by defining the configuration of the particles of the aliphatic polyester-based polymer (B) in the molded article according to the present invention as above, layer separation that occurrs locally in the molded article can be suppressed.

When the aspect ratio A1 of the aliphatic polyester-based polymer (B) in the molded article exceeds 3.6, such problems as deterioration in the planar impact resistance or dimensional stability of the molded article, and layer separation may arise. When the aspect ratio A2 of the aliphatic polyester-based polymer (B) in the molded article exceeds 3.8, such problems as deterioration in the planar impact resistance or dimensional stability of the molded article and layer separation may arise.

In a molede article, by adjusting the average particle diameter of the aliphatic polyester-based polymer (B) at a flow length of 0.9 L at less than 1.0 µm, the particles of component (B) in the molded article can be made smaller, and the planar impact resistance and dimensional stability described above can further be improved.

When the total amount of the polyolefin-based polymer (A), the aliphatic polyester-based polymer (B), the elastomer (C), and the polyolefin-based polymer (D) is designated as 100% by weight, it is preferable that such components be blended with the content of component (A) being 30% to 90% by weight, the content of component (B) being 1% to 50% by weight, the content of component (C) being 1% to 40% by weight, and the content of component (D) being 0.02% to 20% by weight.

When the content of component (A) is less than 30% by weight, such problems as decrease in flexural modulus and lowering of thermal deflection temperature may arise. When the content of component (A) exceeds 90% by weight, such a problem in decrease impact resistance may arise. Accordingly, the content of component (A) in the resin composition according to the present invention is preferably 30% to 90% by weight.

When the content of component (B) is less than 1% by weight, such a problem as decrease in biodegradability may arise. When the content of component (B) exceeds 50% by weight, such problems as decrease in hydrolysis resistance and decrease in molding processability may arise. Accordingly, the content of component (B) in the resin composition according to the present invention is preferably 1% to 50% by weight.

When the content of component (C) is less than 1% by weight, such a problem as decrease in impact resistance may arise. When the content of component (C) exceeds 40% by weight, such problems as decrease in flexural modulus and lowering of thermal deflection temperature may arise. Accordingly, the content of component (C) in the resin composition according to the present invention is preferably 1% to 40% by weight.

When the content of component (D) is less than 0.02% by weight, such problems as layer separation occurring at the time of molding and decrease in impact resistance may arise. When the content of component (D) exceeds 20% by weight, such problems as decrease in flexural modulus and lowering of thermal deflection temperature may arise. Accordingly, the content of component (D) in the resin composition according to the present invention is preferably 0.02% to 20% by weight.

Further, the value obtained by dividing the amount (% by weight) of the aliphatic polyester-based polymer (B) in the composition by the amount (% by weight) of the epoxy group-containing ethylene monomer contained in the epoxy group-containing polyolefin-based polymer (D) is preferably 60 or less. If such a value exceeds 60, the average particle diameter and the aspect ratio of component (B) becomes larger, resulting in such problems as decrease in planar impact resistance, decrease in dimensional stability and occurrence of layer separation.

By the use of the resin composition according to the present invention, a variety of molded articles can be produced. Specifically, molded articles may be any of, for example, injection-molded articles, extrusion-molded articles, compression-molded articles, blow-molded articles, sheets, films, threads, or fabrics. More specific examples include automobile parts, such as bumper fascias, radiator grilles, side moldings, garnishes, wheel covers, aero parts, instrument panels, door trims, seat fabrics, door handles, and floor mats, housings for home electric appliances, films for packaging products, waterproof sheets, various containers, and bottles. When the produced molded articles are used in the form of sheets, the molded articles may be laminated with paper or other polymer sheets and used in the form of multi-layer laminates.

Molded articles can be produced in accordance with conventional techniques without particular limitation. For example, a moled article can be produced by melting the resin composition according to the present invention and then processing it into a form of interest. In this case, desired properties can be imparted to the molded article by adding additives. As additives, for example, fillers, plasticizers, pigments, stabilizers, antistatic agents, ultraviolet absorbers, antioxidants, flame retardants, mold releasing agents, lubricants, dyes, antimicrobial agents, or end sealants may further be added. The content of such additives is preferably 100 parts by weight or less, and more preferably 50 parts by weight or less, relative to 100 parts by weight of the resin composition according to the present invention.

The temperature at which the resin composition according to the present invention can be adjusted to, for example, 180°C to 300°C. When the templerature is lower than the lower limit, the resin composition may not be sufficiently melted, and the components may not be uniformly dispersed. In contrast, the molecular weight of the aliphatic polyester-based polymer (B) may be lowered and properties of the resulting molded article may become deteriorated when the templerature is higher than the upper limit.

### Examples

Hereafter, the present invention is described in greater detail with reference to the examples, but the technical scope of the present invention is not limited to the examples.

### [Example 1]

In this example, an ethylene propylene-containing polypropylene block copolymer having an MFR of 50 g/10 minutes (i.e., NOBLEN WPX5343, manufactured by Sumitomo Chemical Co., Ltd.) was prepared as the polyolefin-based polymer (A). Also, a polylactic acid having an MFR of 15 g/10 minutes (i.e., Terramac TE2000C, manufactured by Unitika Ltd.) was prepared as the aliphatic polyester-based polymer (B). Further, an ethylene-1-octene copolymer having an MFR of 1.2 g/10 minutes (i.e., Engage EG8842, manufactured by Dow Chemical Japan Ltd.) was prepared as the elastomer (C). As the epoxy group-containing polyolefin-based polymer (D), an ethylene-glycidyl methacrylate copolymer having an MFR of 3 g/10 minutes (i.e., Bondfast E, manufactured by Sumitomo Chemical Co., Ltd.) was prepared.

The MFR at 190°C of the polyolefin-based polymer (D) prepared in this example was measured to be 3 g/10 minutes. The MFR was measured using a Melt Indexer L207 (manufactured by Takara Industry Co., Ltd.) under a load of 21N. The glycidyl methacrylate content in the polyolefin-based polymer (D) prepared in this example was 12 wt%.

In this example, components (A) to (D) prepared in the above-described manner were introduced into a twin screw kneader at a given proportion, melt-kneaded at 190°C, and then pelletized. The resulting pellets were subjected to injection molding using an injection molding machine (SE180D, manufactured by Sumitomo Heavy Industries, Ltd.) at a cylinder temperature of 200°C and a mold temperature of 30°C, so that a test piece having a length (L) of 400 mm, a width of 100 mm, and a thickness of 2 mm was molded.

Samples of a central portion in the width direction at 40 mm (0.1 L) and 360 mm (0.9 L) from the gate side of the test piece were cut from the test piece, and the dispersion condition in the central portion in the thickness direction was measured in an orthogonal direction to the resin flow direction. In the measurement, each sample cut from the given position was cut into pieces in a thickness of 120 nm at -70°C using a microtome FCS + UCT (manufactured by Hitachi, Ltd.), and substances other than the aliphatic polyester-based polymer were vapor-stained with ruthenium tetroxide. Then, the sample was observed using a TEM H-7650 (manufactured by Hitachi, Ltd.), so that an image photograph was obtained.

The obtained image photograph was scanned onto a personal computer using a scanner (GT96FLU, manufactured by Seiko Epson Corporation). The IP-1000PC high-definition image analysis system was used to binarize the values, and the aspect ratio was determined on the basis of the weight average particle diameter of the aliphatic polyester-based polymer and the maximal and minimal lengths of the particles.

The resulting test piece was subjected to a shrinkage test (MD/TD), a planar impact resistance test, and a tape peel test in the following manner. The degree of shrinkage was determined by allowing the test piece to stand for 48 hours after molding, measuring the dimentions of the machine direction (MD) and of the transverse direction (TD) which was orthogonal to the machine direction using a Magnescale, and determining the degree of shrinkage on the basis of the mold dimensions. The planar impact resistance test was carried out by performing a destructive test by mounting the test piece in a holder (I.D.: 2 inches), sandwiching the holder with an air chuck having the same shape, mounting a dart having a half-inch tip in the central portion of the sample, and allowing a load of 3 kg to freely fall from a given height onto the dart. The height at which half of a plurality of samples was destroyed was determined, and the breaking energy (kg·cm) was determined on the basis of the product of the height and the load. The tape peel test was carried out by adhering Cellotape CT-18 (manufactured by Nichiban Co., Ltd.) to the surface of the test piece, peeling the tape from the test piece in the vertical direction, and evaluating the occurrence of peeling on the test piece surface. When a test piece experienced peeling, the result is indicated by the symbol "x," the result is indicated by the symbol "o" when the test piece did not experience peeling, and the results of evaluation are shown in Table 1.

### [Example 2]

In this example, a test piece was prepared in the same manner as in Example 1, except that an ethylene-glycidyl methacrylate-methyl acrylate copolymer having an MFR of 9 g/10 minutes (i.e., Bondfast 7M, manufactured by Sumitomo Chemical Co., Ltd.) was used as the epoxy group-containing polyolefin-based polymer (D) and the composition ratio was changed. A shrinkage test (MD/TD), a planar impact resistance test, and a tape peel test were carried out in the same manner as in Example 1. The MFR at 190°C of the polyolefin-based polymer (D) prepared in this example was measured and found to be 9 g/10 minutes. The glycidyl methacrylate content in the polyolefin-based polymer (D) prepared in this example was 6 wt%, and the methyl acrylate content was 30 wt%.

### [Example 3]

In this example, a test piece was prepared in the same manner as in Example 2, except that the cylinder temperature at the time of injection molding was changed to 220°C and the injection speed was increased by 1.7 times. A shrinkage test (MD/TD), a planar impact resistance test, and a tape peel test were carried out in the same manner as in Example 1.

### [Example 4]

In this example, the test piece was prepared in the same manner as in Example 1, except that an injection molding machine was used and the flow length (L) was set at 240 mm. A shrinkage test (MD/TD), a planar impact resistance test, and a tape peel test were carried out in the same manner as in Example 1.

### [Example 5]

In this example, a test piece was prepared in the same manner as in Example 2, except that an injection molding machine was used and the flow length (L) was set at 240 mm. A shrinkage test (MD/TD), a planar impact resistance test, and a tape peel test were carried out in the same manner as in Example 1.

### [Comparative Example 1]

In this comparative example, a test piece was prepared in the same manner as in Example 1, except that the compositions of the polyolefin-based copolymer (A) and the epoxy group-containing polyolefin-based copolymer (D) were changed. A shrinkage test (MD/TD), a planar impact resistance test, and a tape peel test were carried out in the same manner as in Example 1.

### [Comparative Example 2]

In this comparative example, a test piece was prepared in the same manner as in Example 1, except that an ethylene-glycidyl methacrylate copolymer having an MFR of 3 g/10 minutes (i.e., Bondfast 2C, manufactured by Sumitomo Chemical Co., Ltd.) was used as the polyolefin-based copolymer (D) and the composition was changed. A shrinkage test (MD/TD), a planar impact resistance test, and a tape peel test were carried out in the same manner as in Example 1.

### [Comparative Example 3]

In this comparative example, a test piece was prepared in the same manner as in Example 2, except that the test piece did not contain the elastomer (C). A shrinkage test (MD/TD), a planar impact resistance test, and a tape peel test were carried out in the same manner as in Example 1.

### [Comparative Example 4]

In this comparative example, a test piece was prepared in the same manner as in Example 1, except that the test piece did not contain the epoxy group-containing polyolefin-based copolymer (D). A shrinkage test (MD/TD), a planar impact resistance test, and a tape peel test were carried out in the same manner as in Example 1.

### [Comparative Example 5]

In this comparative example, a test piece was prepared in the same manner as in Comparative Example 1, except that an injection molding machine was used and the flow length (L) was set at 240 mm. A shrinkage test (MD/TD), a planar impact resistance test, and a tape peel test were carried out in the same manner as in Example 1.

### [Comparative Example 6]

In this comparative example, a test piece was prepared in the same manner as in Comparative Example 3, except that an injection molding machine was used and the flow length (L) was set at 240 mm. A shrinkage test (MD/TD), a planar impact resistance test, and a tape peel test were carried out in the same manner as in Example 1.

### [Results]

Compositions of the test pieces prepared in Examples 1 to 3 and Comparative Examples 1 to 4 and the results of the tests are summarized in Table 1.

**Table 1**

| | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Component (A) (wt%) | 48 | 62 | 62 | 48 | 62 | 51 | 51 | 77 | 54 | 51 | 77 |
| Component (B) (wt%) | 30 | 11.5 | 11.5 | 30 | 11.5 | 30 | 30 | 11.5 | 30 | 30 | 11.5 |
| Component (C) (wt%) | 16 | 15 | 15 | 16 | 15 | 16 | 14 | - | 16 | 16 | - |
| Component (D) (wt%) | 6 | 11.5 | 11.5 | 6 | 11.5 | 3 | 5 | 11.5 | - | 3 | 11.5 |
| Type | E | 7M | 7M | E | 7M | E | 2C | 7M | - | E | 7M |
| Epoxy group-containing monomer in (B)/(D) | 41.7 | 16.7 | 16.7 | 41.7 | 16.7 | 83.3 | 100.0 | 16.7 | - | 83.3 | 16.7 |
| Flow length L of molded article | 400 | 400 | 400 | 240 | 240 | 400 | 400 | 400 | 400 | 240 | 240 |
| PLA aspect ratio A1 (0.1 L) | 2.8 | 3.5 | 2.1 | 2.1 | 2.9 | 5.6 | 3.6 | 3.3 | 3.8 | 6.5 | 1.3 |
| PLA aspect ratio A2 (0.9 L) | 2.3 | 3.4 | 2.0 | 2.2 | 2.0 | 52 | 4.2 | 3.1 | 4.2 | 2.1 | 1.4 |
| PLA average particle diameter (0.9 L) | 0.6 | 0.8 | 0.5 | 0.6 | 0.9 | 1.6 | 6.1 | 1.7 | 6.4 | 1.5 | 1.3 |
| Degree of shrinkage (MD/TD) | 1.1 | 1.3 | 1.0 | 0.8 | 0.9 | 1.3 | 1.5 | 1.3 | 1.6 | 0.8 | 0.9 |
| Planar impact (FWI) | 140 | 143 | 150 | 270 | 131 | 105 | <15 | 119 | <15 | 68 | 23 |
| Tape peel test | ○ | ○ | ○ | ○ | ○ | ○ | X | ○ | X | ○ | ○ |

As is apparent from Table 1, a molded article exhibited excellent planar impact resistance and a low degree of shrinkage (MD/TD) when the molded article was prepared by the use of a resin composition comprising a polyolefin-based polymer (A), an aliphatic polyester-based polymer (B), an elastomer (C), and an epoxy group-containing polyolefin-based polymer (D), and the aliphatic polyester-based polymer (B) had an aspect ratio A1 of 1.0 to 3.6, an aspect ratio A2 of 1.0 to 3.8, and an average particle diameter of less than 1 µm at a flow length 0.9 L. The results demonstrate that a molded article exhibiting excellent planar impact resistance and dimensional stability can be produced when the aliphatic polyester-based polymer (B) contained in the molded article has an aspect ratio A1 of 1.0 to 3.6, an aspect ratio A2 of 1.0 to 3.8, and an average particle diameter of less than 1 µm at a flow length 0.9 L.

Also, the results of a tape peel test are found to be satisfactory when the aliphatic polyester-based polymer (B) contained in such a molded article has an aspect ratio A1 of 1.0 to 3.6, an aspect ratio A2 of 1.0 to 3.8, and an average particle diameter of less than 1 µm at a flow length 0.9 L.

When the value obtained by dividing the amount of the aliphatic polyester-based polymer (B) in the composition by the amount of the epoxy group-containing ethylene monomer contained in the epoxy group-containing polyolefin-based polymer (D) is 60 or less, the molded article was found to exhibit excellent planar impact resistance and a low degree of shrinkage (MD/TD), and the results of a tape peel test were found to be satisfactory.

All publications, patents, and patent applications cited herein are incorporated herein by reference in their entirety.

## Claims

1. A molded article comprising a resin composition comprising a polyolefin-based polymer (A) not comprising an epoxy group, an aliphatic polyester-based polymer (B), an ethylene-α olefin-based elastomer (C), and an epoxy group-containing polyolefin-based polymer (D), wherein the aliphatic polyester-based polymer (B) has an aspect ratio A1 of 1.0 to 3.6 at a flow length of 0.1 L, an aspect ratio A2 of 1.0 to 3.8 at a flow length of 0.9 L, and an average particle diameter of less than 1 µm,at a flow length 0.9 L when the maximum flow length is designated as L.

2. The molded article according to claim 1, wherein, when a total amount of the polyolefin-based polymer (A), the aliphatic polyester-based polymer (B), the ethylene-α olefin-based elastomer (C), and the polyolefin-based polymer (D) is designated as 100% by weight, the content of (A) is 30 to 90% by weight, the content of (B) is 1 to 50% by weight, the content of (C) is 1 to 40% by weight, and the content of (D) is 0.02 to 20% by weight.

3. The molded article according to claim 1, wherein the value obtained by dividing the amount of the aliphatic polyester-based polymer (B) in the composition by the amount of the epoxy group-containing ethylene monomer contained in the epoxy group-containing polyolefin-based polymer (D) is 60 or less.

4. The molded article according to claim 1, wherein the ethylene-α olefin-based elastomer (C) has a melt flow rate (MFR), measured at 190°C under a load of 21N, of 0.5 to 3.0 g/10 minutes and the density of 0.855 to 0.875 g/cm³.

5. The molded article according to claim 1, wherein the maximum flow length L is 200 mm or more.

6. The molded article according to claim 1, wherein the polyolefin-based polymer (A) is a crystalline polypropylene-based polymer; and wherein the degree of crystallinity determined by X-ray diffraction is 25% or higher.

7. A method for producing a molded article comprising a step of processing a resin composition comprising a polyolefin-based polymer (A) not comprising an epoxy group, an aliphatic polyester-based polymer (B), an ethylene-α olefin-based elastomer (C), and an epoxy group-containing polyolefin-based polymer (D) into a given form by molding, wherein the aliphatic polyester-based polymer (B) has an aspect ratio A1 of 1.0 to 3.6 at a flow length of 0.1 L, an aspect ratio A2 of 1.0 to 3.8 at a flow length of 0.9 L, and an average particle diameter of less than 1 µm at a flow length 0.9 L when the maximum flow length is designated as L.

8. The method for producing a molded article according to claim 7, wherein, when a total amount of the polyolefin-based polymer (A), the aliphatic polyester-based polymer (B), the ethylene-α olefin-based elastomer (C), and the polyolefin-based polymer (D) is designated as 100% by weight, the content of (A) is 30 to 90% by weight, the content of (B) is 1 to 50% by weight, the content of (C) is 1 to 40% by weight, and the content of (D) is 0.02 to 20% by weight.

9. The method for producing a molded article according to claim 7, wherein the value obtained by dividing the amount of the aliphatic polyester-based polymer (B) in the composition by the amount of the epoxy group-containing ethylene monomer contained in the epoxy group-containing polyolefin-based polymer (D) is 60 or less.

10. The method for producing a molded article according to claim 7, wherein the ethylene-α olefin-based elastomer (C) has a melt flow rate (MFR), measured at 190°C under a load of 21N, of 0.5 to 3.0 g/10 minutes and the density of 0.855 to 0.875 g/cm³.

11. The method for producing a molded article according to claim 7, wherein the maximum flow length L is 200 mm or more.

12. The method for producing a molded article according to claim 7, wherein the polyolefin-based polymer (A) is a crystalline polypropylene-based polymer; and wherein the degree of crystallinity determined by X-ray diffraction analysis is 25% or higher.

## Patentansprüche

1. Formartikel, der eine Harzzusammensetzung umfasst, die ein Polyolefinpolymer (A), das keine Epoxygruppe umfasst, ein aliphatisches Polyesterpolymer (B), ein Ethylen-α-olefinelastomer (C) und ein Epoxygruppen-enthaltendes Polyolefinpolymer (D) umfasst, wobei das aliphatische Polyesterpolymer (B) ein Aspektverhältnis A1 von 1,0 bis 3,6 bei einer Fließlänge von 0,1 L, ein Aspektverhältnis A2 von 1,0 bis 3,8 bei einer Fließlänge von 0,9 L und einen mittleren Teilchendurchmesser von weniger als 1 µm bei einer Fließlänge von 0,9 L aufweist, wenn die maximale Fließlänge als L bezeichnet wird.

2. Formartikel nach Anspruch 1, wobei, wenn die Gesamtmenge des Polyolefinpolymers (A), des aliphatischen Polyesterpolymers (B), des Ethylen-α-olefinelastomers (C) und des Polyolefinpolymers (D) als 100 Gew.-% bezeichnet wird, der Gehalt an (A) 30 bis 90 Gew.-% beträgt, der Gehalt an (B) 1 bis 50 Gew.-% beträgt, der Gehalt an (C) 1 bis 40 Gew.-% beträgt und der Gehalt an (D) 0,02 bis 20 Gew.-% beträgt.

3. Formartikel nach Anspruch 1, wobei der Wert, der erhalten wird durch Dividieren der Menge des aliphatischen Polyesterpolymers (B) in der Zusammensetzung durch die Menge des in dem Epoxygruppen-enthaltenden Polyolefinpolymer (D) enthaltenen Epoxygruppen-enthaltenden Ethylenmonomers, 60 oder weniger beträgt.

4. Formartikel nach Anspruch 1, wobei das Ethylen-α-olefinelastomer (C) eine Schmelzflussrate ("melt flow rate" MFR), gemessen bei 190 °C unter einer Last von 21 N, von 0,5 bis 3,0 g/10 min und die Dichte von 0,855 bis 0,875 g/cm³ aufweist.

5. Formartikel nach Anspruch 1, wobei die maximale Fließlänge L gleich 200 mm oder mehr beträgt.

6. Formartikel nach Anspruch 1, wobei das Polyolefinpolymer (A) ein kristallines Polypropylenpolymer ist und wobei der durch Röntgenbeugung bestimmte Grad der Kristallinität 25 % oder größer ist.

7. Verfahren zur Herstellung eines Formartikels umfassend einen Schritt des Verarbeitens einer Harzzusammensetzung, die ein Polyolefinpolymer (A), das keine Epoxygruppe umfasst, ein aliphatisches Polyesterpolymer (B), ein Ethylen-α-olefinelastomer (C) und ein Epoxygruppen-enthaltendes Polyolefinpolymer (D) umfasst, durch Formen in eine gegebene Form, wobei das aliphatische Polyesterpolymer (B) ein Aspektverhältnis A1 von 1,0 bis 3,6 bei einer Fließlänge von 0,1 L, ein Aspektverhältnis A2 von 1,0 bis 3,8 bei einer Fließlänge von 0,9 L und einen mittleren Teilchendurchmesser von weniger als 1 µm bei einer Fließlänge von 0,9 L aufweist, wenn die maximale Fließlänge als L bezeichnet wird.

8. Verfahren zur Herstellung eines Formartikels nach Anspruch 7, wobei, wenn die Gesamtmenge des Polyolefinpolymers (A), des aliphatischen Polyesterpolymers (B), des Ethylen-α-olefinelastomers (C) und des Polyolefinpolymers (D) als 100 Gew.-% bezeichnet wird, der Gehalt an (A) 30 bis 90 Gew.-% beträgt, der Gehalt an (B) 1 bis 50 Gew.-% beträgt, der Gehalt an (C) 1 bis 40 Gew.-% beträgt und der Gehalt an (D) 0,02 bis 20 Gew.-% beträgt.

9. Verfahren zur Herstellung eines Formartikels nach Anspruch 7, wobei der Wert, der erhalten wird durch Dividieren der Menge des aliphatischen Polyesterpolymers (B) in der Zusammensetzung durch die Menge des in dem Epoxygruppen-enthaltenden Polyolefinpolymer (D) enthaltenen Epoxygruppen-enthaltenden Ethylenmonomers, 60 oder weniger beträgt.

10. Verfahren zur Herstellung eines Formartikels nach Anspruch 7, wobei das Ethylen-α-olefinelastomer (C) eine Schmelzflussrate ("melt flow rate" MFR), gemessen bei 190 °C unter einer Last von 21 N, von 0,5 bis 3,0 g/10 min und die Dichte von 0,855 bis 0,875 g/cm³ aufweist.

11. Verfahren zur Herstellung eines Formartikels nach Anspruch 7, wobei die maximale Fließlänge L gleich 200 mm oder mehr beträgt.

12. Verfahren zur Herstellung eines Formartikels nach Anspruch 7, wobei das Polyolefinpolymer (A) ein kristallines Polypropylenpolymer ist und wobei der durch Röntgenbeugung bestimmte Grad der Kristallinität 25 % oder größer ist.

## Revendications

1. Article moulé comprenant une composition de résine comprenant un polymère à base de polyoléfine (A) ne comprenant pas de groupe époxy, un polymère à base de polyester aliphatique (B), un élastomère à base d'éthylène-α-oléfine (C), et un polymère à base de polyoléfine contenant des groupes époxy (D), dans lequel le polymère à base de polyester aliphatique (B) possède un rapport de forme A1 de 1,0 à 3,6 à une longueur d'écoulement de 0,1 1, un rapport de forme A2 de 1,0 à 3,8 à une longueur d'écoulement de 0,9 1, et un diamètre moyen de particules inférieur à 1 µm à une longueur d'écoulement de 0,9 1 lorsque la longueur d'écoulement maximale est désignée par L.

2. Article moulé selon la revendication 1, dans lequel, lorsqu'une quantité totale du polymère à base de polyoléfine (A), du polymère à base de polyester aliphatique (B), de l'élastomère à base d'éthylène-α-oléfine (C), et du polymère à base de polyoléfine (D) représente 100 % en poids, la teneur de (A) est de 30 à 90 % en poids, la teneur de (B) est de 1 à 50 % en poids, la teneur de (C) est de 1 à 40 % en poids, et la teneur de (D) est de 0,02 à 20 % en poids.

3. Article moulé selon la revendication 1, dans lequel la valeur obtenue en divisant la quantité du polymère à base de polyester aliphatique (B) dans la composition par la quantité du monomère d'éthylène contenant des groupes époxy contenu dans le polymère à base de polyoléfine contenant des groupes époxy (D) est inférieure ou égale à 60.

4. Article moulé selon la revendication 1, dans lequel l'élastomère à base d'éthylène-α-oléfine (C) possède un indice de fluidité (MFR), mesuré à 190 °C pour une charge de 21 N, de 0,5 à 3,0 g/10 minutes et une densité de 0,855 à 0,875 g/cm³.

5. Article moulé selon la revendication 1, dans lequel la longueur d'écoulement maximale L est supérieure ou égale à 200 mm.

6. Article moulé selon la revendication 1, dans lequel le polymère à base de polyoléfine (A) est un polymère cristallin à base de polypropylène, et dans lequel le degré de cristallinité, déterminé par une analyse de diffraction aux rayons X, est supérieur ou égal à 25 %.

7. Procédé de production d'un article moulé comprenant une étape de traitement d'une composition de résine comprenant un polymère à base de polyoléfine (A) ne comprenant pas de groupe époxy, un polymère à base de polyester aliphatique (B), un élastomère à base d'éthylène-α-oléfine (C), et un polymère à base de polyoléfine contenant des groupes époxy (D) en une forme donnée par le moulage, dans lequel le polymère à base de polyester aliphatique (B) possède un rapport de forme A1 de 1,0 à 3,6 à une longueur d'écoulement de 0,1 1, un rapport de forme A2 de 1,0 à 3,8 à une longueur d'écoulement de 0,9 1, et un diamètre moyen de particules inférieur à 1 µm à une longueur d'écoulement de 0,9 1 lorsque la longueur d'écoulement maximale est désignée par L.

8. Procédé de production d'un article moulé selon la revendication 7, dans lequel, lorsqu'une quantité totale du polymère à base de polyoléfine (A), du polymère à base de polyester aliphatique (B), de l'élastomère à base d'éthylène-α-oléfine (C), et du polymère à base de polyoléfine (D) représente 100 % en poids, la teneur de (A) est de 30 à 90 % en poids, la teneur de (B) est de 1 à 50 % en poids, la teneur de (C) est de 1 à 40 % en poids, et la teneur de (D) est de 0,02 à 20 % en poids.

9. Procédé de production d'un article moulé selon la revendication 7, dans lequel la valeur obtenue en divisant la quantité du polymère à base de polyester aliphatique (B) dans la composition par la quantité du monomère d'éthylène contenant des groupes époxy contenu dans le polymère à base de polyoléfine contenant des groupes époxy (D) est inférieure ou égale à 60.

10. Procédé de production d'un article moulé selon la revendication 7, dans lequel l'élastomère à base d'éthylène-α-oléfine (C) possède un indice de fluidité (MFR), mesuré à 190 °C pour une charge de 21 N, de 0,5 à 3,0 g/10 minutes et une densité de 0,855 à 0,875 g/cm³.

11. Procédé de production d'un article moulé selon la revendication 7, dans lequel la longueur d'écoulement maximale L est supérieure ou égale à 200 mm.

12. Procédé de production d'un article moulé selon la revendication 7, dans lequel le polymère à base de polyoléfine (A) est un polymère cristallin à base de polypropylène, et dans lequel le degré de cristallinité, déterminé par une analyse de diffraction aux rayons X, est supérieur ou égal à 25 %.
